# EUROPEAN PATENT SPECIFICATION

(11) **EP 3 129 294 B1**
(45) Date of publication and mention of the grant of the patent: **16.05.2018**
(21) Application number: 15712963.6
(22) Date of filing: 31.03.2015
(51) Int. Cl.: B65G 29/02, B65G 47/86, B65B 29/00, B65B 35/26, B65B 35/56, B65B 11/00, B65B 59/02

(54) **WRAPPING APPARATUS**
EINWICKELVORRICHTUNG
APPAREIL D'EMBALLAGE

(30) Priority: 10.04.2014 IT BO20140207
(43) Date of publication of application: 15.02.2017
(73) Proprietor: CMFIMA S.R.L., 40026 Imola (BO) (IT)
(72) Inventor: FRABETTI, Fabio, I-40123 Bologna (IT); GIORGI, Giovanni, I-40033 Casalecchio di Reno (IT); BARALDI, Luca, I-40133 Bologna (IT)
(74) Representative: Modiano, Micaela Nadia
(86) International application number: PCT/EP2015/057124
(87) International publication number: WO 2015/155081

(56) References cited:
- WO-A1-03/082675
- WO-A1-2007/091164
- GB-A- 2 277 507

## Description

The present invention relates to a wrapping apparatus, particularly indicated for the individual packaging of small products. Such a wrapping apparatus is known e.g. from WO 03/082675 A1. In particular the products can be candies, chocolates, pastries, chocolate shapes and the like, i.e. products that are delicate and easily subjected to deformations and wear when handled.

The individual packaging of products consists of picking them up from a supply line and wrapping them with flaps of paper-like or polymeric material, or with sheets, generally multi-layer, provided with a thin layer of aluminum.

The packaging can occur by adopting substantially three different wrapping methods (from which a plurality of intermediate and derived solutions can be identified).

The wrapper can be folded on the product, according to predefined folding lines so that the overlapping flaps of the sheet are in turn made to fit together with one of the surfaces of the product which is contiguous thereto. This is a type of wrapping used for chocolates that are predominantly prismatic or more generally polyhedral in shape.

According to a further implementation, the wrapping can be done by wrapping the product and producing two twists with the sheet at the two opposite ends of the product.

This form of wrapping, which in the trade is known as "double twist" (and substantially shaped like a bonbon or Christmas cracker), is particularly indicated for products that are spherical, cylindrical, ellipsoid and the like.

A third type of wrapping comprises flaps superimposed and folded on one side, and a twist on the opposite side.

This third form of wrapping, which in the trade is known as "single twist", is particularly indicated for axially-symmetrical products provided with a substantially flat base.

The main problem seen in conventional wrapping apparatuses, for the above mentioned products, is linked to the necessity of picking up the product from the supply line in order to be able to manipulate it, orienting it and covering it with the respective wrapper.

In fact the picking up transfers the product, which comes by translation from a supply line, onto a manipulation drum in which the product will follow a substantially circular path.

It is thus necessary that specific grip means, which are integral with the rotating drum, grip the product while it performs a translational motion on the supply line.

In order to be able to effectively grip the product it is necessary that the grip means move in synchrony with the product, which performs a translational motion.

Usually therefore, the grip means are associated with a respective actuator that makes them slow down (while the drum with which they are coupled rotates at a constant speed) and subsequently accelerate (after the picking up) in order to make them available to the subsequent work station.

In this step the product undergoes enormous stresses: the acceleration ramp to which it is subjected after being picked up from the supply line is such as to cause possible damage to the product (substantially for reasons of inertia).

In fact, in order to subject the product to strong acceleration forces, it is necessary to hold it with force with the grip means: however, this is a source of potential damage to the surface of the product (in particular for delicate products like chocolates and pastries) since clamping it firmly can produce permanent deformations on the outer surface.

If it is decided to minimize the clamping force of the grip means on the product, then the acceleration to which it is subjected may be such as to cause the slipping of the product in the grip means, with consequent abrasion of its outer surfaces.

Furthermore, it is of no less importance to note that the grip means move along a circular path, while the products perform a translational motion on a surface along the supply line.

Thus it happens that the product, once gripped by the grip means, undergoes a rotation while it is still in contact with the supply line: this rotation could cause an edge thereof to collide with a wall of the line, becoming damaged as a result.

The aim of the present invention is to solve the above mentioned drawbacks, by providing a wrapping apparatus in which the products are subjected to acceleration forces that are substantially contained and which thus do not generate risks of surface damage to the products.

Within this aim, an object of the invention is to provide a wrapping apparatus in which the product, in the transition from the supply line to the grip means, does not risk colliding against parts of the line, becoming damaged as a result.

Another object of the invention is to provide a wrapping apparatus in which the grip means can complete the clamping operations along a sufficiently long section in order to prevent the clamping from being too fast, thus guarding against the possibility that the rapidity of the clamping could damage the product.

Another object of the present invention is to provide a wrapping apparatus which is low cost, easily and practically implemented and safe in use.

This aim and these and other objects are achieved by a wrapping apparatus, of the type comprising a line for supplying queued products and grip means for picking up one product at a time from said line and for transferring it to a respective station for superimposing it on a covering flap and for closing said flap over the product, characterized in that it comprises a pair of mutually opposite carousels, which are coaxial and rotate synchronously, each carousel supporting at least two grip means, which are distributed angularly along said carousel and are aligned with corresponding grip means of the other carousel, said grip means being articulated to a toothed planetary gear that is accommodated in said carousel and can rotate about a fixed toothed sun gear of said carousel, said grip means being pivoted eccentrically on each planetary gear, defining a path that has a portion that is inclined and divergent with respect to said supply line, said portion being arranged downstream of the area for the clamping of said product by said grip means.

Further characteristics and advantages of the invention will become better apparent from the description of a preferred, but not exclusive, embodiment of the wrapping apparatus according to the invention, which is illustrated by way of non-limiting example in the accompanying drawings wherein:

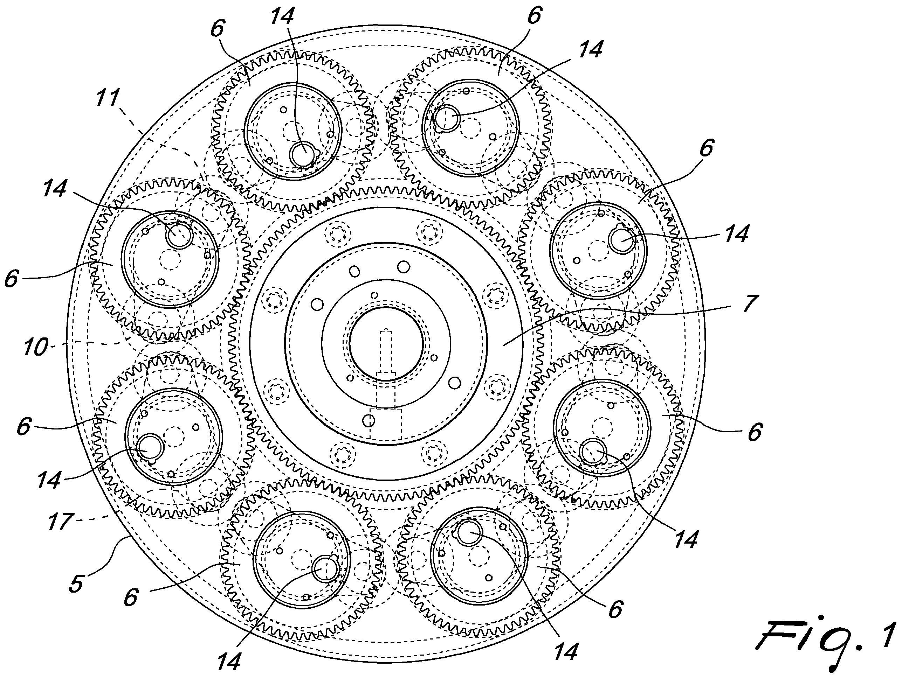

Figure 1 is a front elevation view of a carousel of a wrapping apparatus according to the invention;

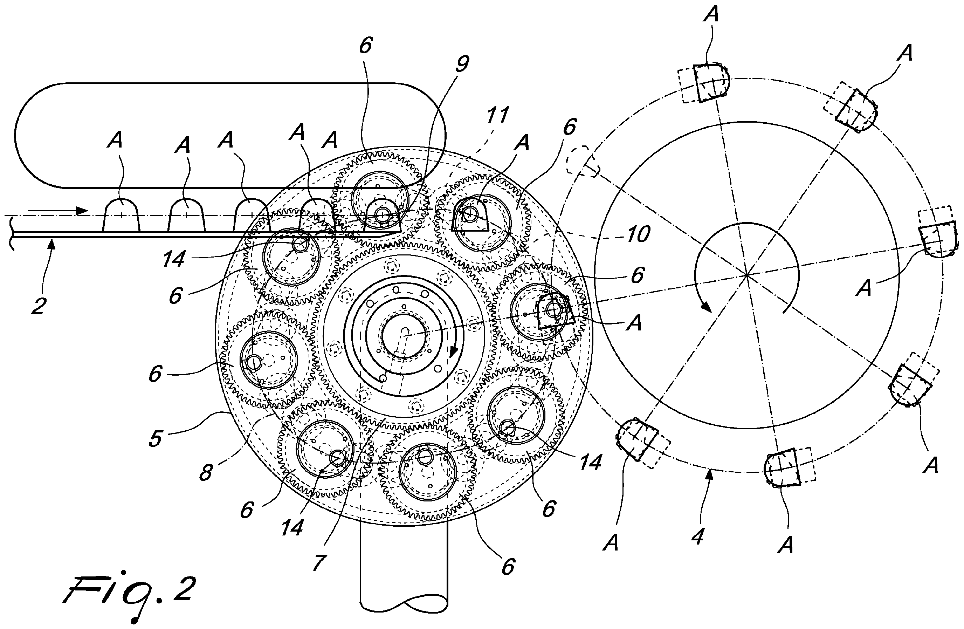

Figure 2 is a schematic front elevation view of a portion of a wrapping apparatus according to the invention;

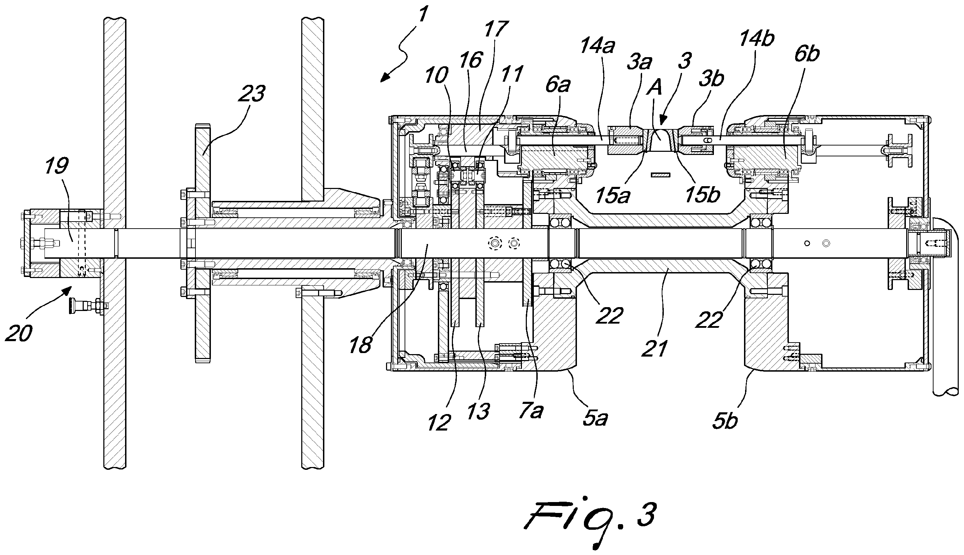

Figure 3 is a sectional side view, taken along a longitudinal vertical line, of a wrapping apparatus according to the invention;

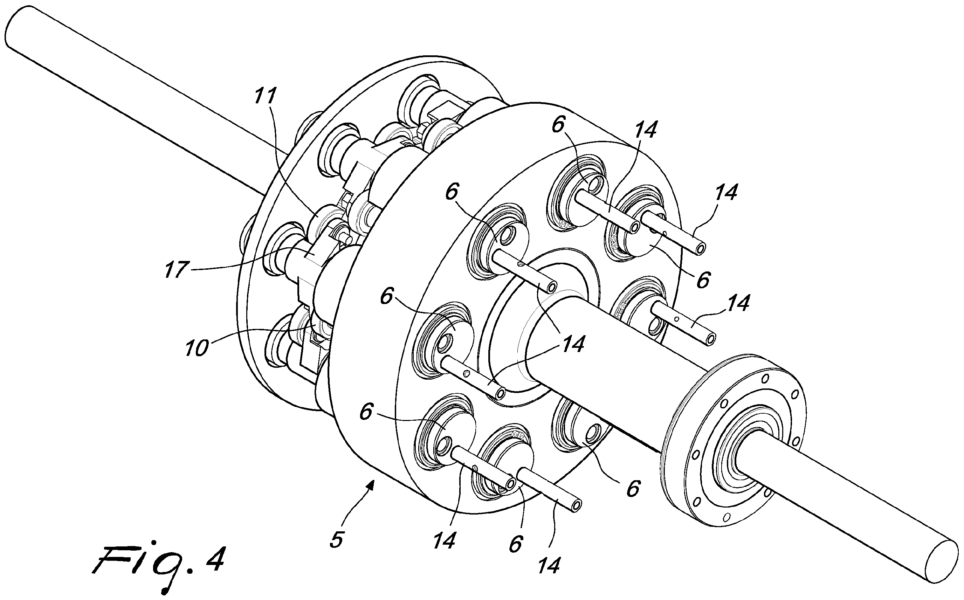

Figure 4 is a perspective view of a carousel of a wrapping apparatus according to the invention;

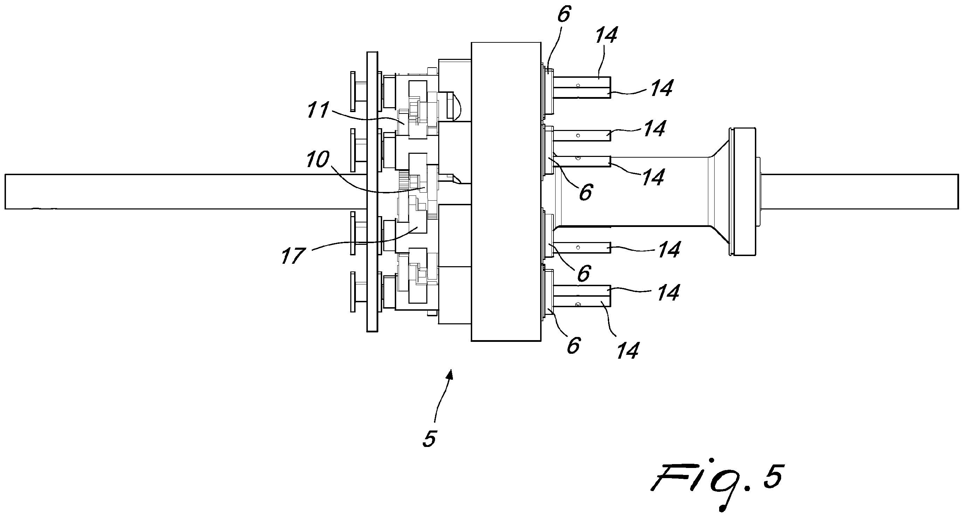

Figure 5 is a side view of a carousel of a wrapping apparatus according to the invention.

With reference to the figures, the reference numeral 1 generally designates a wrapping apparatus for products A.

The wrapping apparatus 1 comprises a line 2 for supplying queued products A and grip means 3 for picking up one product A at a time from the line 2 and for transferring it to a respective station 4 which will be adapted to superimpose a covering flap on each product A and to close the flap over the product A.

According to the invention the apparatus 1 comprises a pair of mutually opposite carousels 5a and 5b.

The carousels 5a and 5b are coaxial and rotate synchronously.

Each carousel 5a, in turn, supports at least two grip means 3a, which are distributed angularly along the carousel 5a and are aligned with corresponding grip means 3b of the other carousel 5b.

It should conveniently be noted that, according to the invention, the grip means 3a and 3b are articulated to a respective toothed planetary gear 6 that is accommodated in the respective carousel 5 (respectively the planetary gears 6a will be accommodated in the carousel 5a and the planetary gears 6b will be accommodated in the carousel 5b) and rotatable on a fixed toothed sun gear 7 on the respective carousel 5 (respectively the sun gear 7a will be accommodated in the carousel 5a and a further sun gear, not shown in the figure, will be accommodated in the carousel 5b).

The grip means 3 (respectively 3a and 3b) are pivoted eccentrically on each respective planetary gear 6 (respectively 6a and 6b), defining a path 8 that has a portion 9 that is inclined and divergent with respect to the supply line 2.

It should be noted that the portion 9 is arranged downstream of the area for the clamping of the product A by the grip means 3 (respectively 3a and 3b).

The aim of arranging the portion 9 downstream of the area in which the product A is clamped (and thus picked up) is dictated by the need to slightly lift the product A after gripping it in order to prevent it from colliding against a part of the supply line 2, as a result becoming damaged while it has already been handed over to the grip means 3 (3a and 3b).

With particular reference to an embodiment of undoubted practical and applicative interest, the grip means 3 (respectively 3a and 3b) are functionally associated, for their orientation and for the orientation of the product A retained by them, with at least one respective probe 10 and 11 that can slide on at least one respective profiled cam 12 and 13, which is in turn substantially integral with the toothed sun gear 7.

The translations of the at least one probe 10 and 11 on the edge of the respective cam 12 and 13 generate rotations of the grip means 3a and 3b with consequent modification of the orientation of the product A retained between them.

Thanks to the probes 10 and 11 it is thus possible to orient the product so that it can be sent to the subsequent station 4 with the correct orientation for superimposition on the flap of wrapper and the subsequent closing of the same over the product A.

Note in fact that the products A must be differently oriented, in order to be capable of being juxtaposed with the flap of wrapper according to the ideal configuration, according to whether the wrapping to be provided is folded "double twist" (like a bonbon) or "single twist" (with particular reference to the descriptions given above).

The ability to perform this orientation of the product A by way of the carousels 5 makes it possible to simplify the structure of the subsequent station 4 which will not have to modify the position of the product A that will be sent to it.

It should further be noted that the grip means 3 (3a and 3b) comprise a supporting shaft 14 (14a, 14b) for their first end 15 (15a and 15b), which is intended to clamp the product A.

The shaft 14 (14a, 14b) is translatable for the mutual approach of mutually opposite and aligned ends of means 3a and 3b, with consequent clamping of the product A (obviously the translation movement will also allow the reverse operation of moving the ends of means 3a and 3b apart, with the consequent release of the product A).

The shaft 14 (14a and 14b), substantially at its second end 16, which is opposite to the first end 15 (15a and 15b), is coupled to at least one probe 10 and 11 that can slide along the at least one cam 12 and 13.

It should be noted that in reality the shaft 14 (14a and 14b) is constituted by two parallel and non-aligned rods, one of which is arranged axially with respect to the corresponding planetary gear 6 (6a and 6b), in particular this is the rod that is integral with the second end 16, and the other one is misaligned and eccentric with respect to the corresponding planetary gear 6 (6a and 6b).

If the two rods were aligned and both coaxial with the axis of the corresponding planetary gear 6 they could define a single shaft 14 (made of a single piece), but in such case the grip means 3 would not move along the preset path 8.

With reference to an embodiment that is particularly efficient, the probes 10 and 11 are two in number, provided with an idle end roller that is intended to abut against the lateral edge of a respective contoured cam 12 and 13.

In such case, each pair of probes 10 and 11 will be coupled to a bracket 17 that is integral with a respective shaft 14 (in particular with its second end 16) of a respective grip means 3.

In implementation terms it is clear that the wrapping apparatus 1 offers great versatility and it can be provided according to a plurality of different configurations.

In particular, the planetary gears 6 can be arranged according to a reference configuration which is preferably selected from among:
- two planetary gears 6, arranged at 180° to each other,
- three planetary gears 6, arranged at 120° to each other,
- four planetary gears 6, arranged at 90° to each other,
- five planetary gears 6, arranged at 72° to each other,
and respective multiples.

In this manner it can be seen that the apparatus 1 can be adapted to operate at extremely high speeds, for example by adopting a configuration with eight planetary gears 6 (or an even higher number): this application is particularly advantageous if products of regular shape and/or small size are to be manipulated.

Alternatively it is possible to consider operating at lower speeds, in order to manipulate products of larger size and/or of irregular shape, using an apparatus 1 that is provided with only two (or three) planetary gears 6.

The possibility is not excluded of adopting any intermediate solution as well, including solutions that involve the presence of seven, or eleven, or thirteen, or seventeen, angularly equidistant planetary gears 6.

It should be noted that, with a number of planetary gears 6 that is a multiple of a reference configuration (selected for example from those mentioned previously), some of the grip means 3 can be removable, for operation with reduced productivity (in relation to the lower operating speed with respect to an apparatus 1 specifically designed for that specific number of grip means 3), according to that reference configuration.

By way of example it should be noted that, in the case of a wrapping apparatus 1 provided with eight (or six, or ten) planetary gears 6 it will be possible to remove the alternate grip means 3 (essentially, keeping only the even, or odd, grip means 3 on the apparatus 1, and removing all the odd, or even, grip means 3).

In this manner it will be possible to make the apparatus 1 operate with only four (or three or five) grip means 3.

It should be noted that the at least one cam 12 and 13 and the sun gear 7 of the facing and mutually opposite carousels 5 are integral with a fixed axis 18.

The head 19 of the axis 18 is associated with a respective movement element 20 for the controlled rotation of the axis 18 according to at least two different arrangements.

Such arrangements will correspond to different rotations of the cams with consequent different modes of orientation of the product A while it follows the path 8, held by the grip means 3 after its clamping.

It should moreover be noted that the cams 12 and 13 are mutually complementary: each cam has a contoured edge that defines, in contiguous sectors, different paths for the at least one probe 10 and 11 which correspond to different orientations of each product A along its path 8, after the picking up from the supply line 2.

In this manner, simply by rotating the axis 18 by way of the movement element 20, it will be possible to align the probes 10 and 11, at the portion of path 8 in which the picking up of the product A from the line 2 occurs, with a sector of the cams 12 and 13 which will impose a specific rotation of the grip means 3. Such rotation makes it possible to hand over the product A with the correct orientation which will ensure the correct wrapping of the product A.

It should further be noted that a spacer sleeve 21 is interposed between the facing and mutually opposite carousels 5, and can rotate freely on the axis 18 and is rigidly coupled to the outer frame of the carousels 5a and 5b, for mutual mating.

Thanks to the presence of the spacer sleeve 21 the carousels 5 thus become rigidly coupled.

More specifically, bearings 22 are interposed between the outer frame of the carousels 5 and the axis 18, and between the sleeve 21 and the axis 18, in order to facilitate the rotation, imposed by a respective motor element, of the carousels 5 and of the sleeve 21, which are rigidly coupled.

The motor element could be controlled by a pulley 23 (or toothed wheel) which is intended to transfer the motion with the correct reduction ratio to the carousels 5 and to the sleeve 21.

Advantageously the present invention solves the above mentioned problems, by providing a wrapping apparatus 1 in which the products A are subjected to acceleration forces that are substantially contained and which thus do not generate risks of surface damage to the products A.

In fact the path 8, obtained thanks to the eccentricity of the grip means 3 with respect to the planetary gears 6 and to the meshing of the planetary gears with the sun gear 7, is such as to allow a manipulation of the product A which ensures it is lifted from the supply line 2 without subjecting it to any sudden movement.

Conveniently, in the wrapping apparatus 1 the product A, in the transition from the supply line 2 to the grip means 3, does not risk colliding against walls of the line 2, becoming damaged as a result: this is because the path 8, at such step, implies a gradual lifting of the product A; furthermore the rotation imposed by the movement of the probes 10 and 11 on the cams 12 and 13 is carefully calculated in order to prevent the edge of the product A from interfering with the line 2 in the moments immediately after the picking up.

Conveniently, the wrapping apparatus 1 ensures that the grip means 3 can complete the clamping operations along a sufficiently long section, in order to prevent the clamping from being too fast: this constructional detail thus guards against the possibility that the rapidity of the clamping could damage the product A.

Profitably, the wrapping apparatus 1 is characterized by low cost and the relatively simple practical implementation, a peculiarity that ensures its industrial application.

## Claims

1. A wrapping apparatus, of the type comprising a line (2) for supplying queued products (A) and grip means (3) for picking up one product (A) at a time from said line (2) and for transferring it to a respective station (4) for superimposing it on a covering flap and for closing said flap over the product (A), **characterized in that** it comprises a pair of mutually opposite carousels (5), which are coaxial and rotate synchronously, each carousel (5) supporting at least two grip means (3), which are distributed angularly along said carousel (5) and are aligned with corresponding grip means (3) of the other carousel (5), said grip means (3) being articulated to a toothed planetary gear (6) that is accommodated in said carousel (5) and can rotate about a fixed toothed sun gear (7) of said carousel (5), said grip means (3) being pivoted eccentrically on each planetary gear (6), defining a path (8) that has a portion (9) that is inclined and divergent with respect to said supply line (2), said portion (9) being arranged downstream of the area for the clamping of said product (A) by said grip means (3).

2. The wrapping apparatus according to claim 1, **characterized in that** said grip means (3) are functionally associated, for their orientation and for the orientation of the product (A) retained by them, with at least one respective probe (10, 11) that can slide on at least one profiled cam (12, 13) that is substantially integral with said sun gear (7), the translations of said at least one probe (10, 11) producing rotations of said grip means (3) with consequent modification of the orientation of the product (A) retained between them.

3. The wrapping apparatus according to claim 2, **characterized in that** said grip means (3) comprise a supporting shaft (14) for their first end (15a, 15b) which is intended to clamp the product (A), said shaft (14) being translatable for the mutual approach and spacing apart of ends (15a, 15b) of mutually opposite and aligned means (3), with consequent clamping and, respectively, releasing of the product (A).

4. The wrapping apparatus according to claim 3, **characterized in that** said shaft (14), substantially at its second end (16), which is opposite said first end (15a, 15b), is coupled to at least one said probe (10, 11) that can slide along said at least one cam (12, 13).

5. The wrapping apparatus according to claim 4, **characterized in that** said probes (10, 11) are two in number and are provided with an idle end roller that is intended to abut against the lateral edge of a respective contoured cam (12, 13), each pair of probes (10, 11) being coupled to a bracket (17) that is associated with a respective shaft (14) of a respective grip means (3).

6. The wrapping apparatus according to claim 1, **characterized in that** said planetary gears (6) are arranged in a reference configuration selected preferably from among
- two planetary gears (6), arranged at 180° to each other,
- three planetary gears (6), arranged at 120° to each other,
- four planetary gears (6), arranged at 90° to each other,
- five planetary gears (6), arranged at 72° to each other,
and respective multiples.

7. The wrapping apparatus according to claim 1, **characterized in that** for a number of planetary gears (6) that is a multiple of a reference configuration, part of the grip means (3) is removable for operation with reduced productivity, according to said reference configuration.

8. The wrapping apparatus according to claims 2-7, **characterized in that** said at least one cam (12, 13) and said sun gear (7) of said facing and mutually opposite carousels (5) are integral with a fixed axis (18), the head (19) of said axis (18) being associated with a respective movement element (20) for the controlled rotation of said axis (18) according to at least two different arrangements, which correspond to different rotated configurations of said cams (12, 13) with consequent different variation of the orientation of the product (A) along the path (8) when said product (A) is retained by said grip means (3) after its clamping.

9. The wrapping apparatus according to claims 2-8, **characterized in that** said cams (12, 13) are mutually complementary, each cam (12, 13) having a contoured edge that defines, in contiguous sectors, different paths for said at least one probe (10, 11) that correspond to different variations of the orientation of the product (A) along the path (8) after the pickup of each individual product (A) from said supply line (2).

10. The wrapping apparatus according to one of the claims 8,9, **characterized in that** a spacer sleeve (21) is interposed between said facing and mutually opposite carousels (5), can rotate freely on said axis (18) and is coupled rigidly to the outer frame of said carousels (5) for mutual mating.

11. The wrapping apparatus according to claims 8-10, **characterized in that** bearings (22) are interposed between the outer frame of said carousels (5) and said axis (18) and between said sleeve (21) and said axis (18) in order to facilitate the rotation, imposed by a respective motor element, of said carousels (5) and said sleeve (21), which are rigidly coupled.

## Patentansprüche

1. Eine Einwickelvorrichtung von dem Typ, der Folgendes umfasst: eine Linie (2) zum Zuführen hintereinander angeordneter Produkte (A) und Greifmittel (3) zum Aufnehmen eines Produkts (A) zur Zeit von der Linie (2) und zum Überführen desselben an eine entsprechende Station (4), um es auf einen Abdeckflügel zu legen und um den Flügel über dem Produkt (A) zu schließen, **dadurch gekennzeichnet, dass** sie ein Paar einander gegenüberliegender Karusselle (5) umfasst, die koaxial sind und sich synchron drehen, wobei jedes Karussell (5) mindestens zwei Greifmittel (3) trägt, welche winklig entlang dem Karussell (5) verteilt und mit entsprechenden Greifmitteln (3) des anderen Karussells (5) ausgerichtet sind, wobei die Greifmittel (3) gelenkig mit einem Planeten-Zahnrad (6) verbunden sind, das in dem Karussell (5) untergebracht ist und sich um ein festes Sonnen-Zahnrad (7) das Karussells (5) drehen kann, wobei die Greifmittel (3) drehgelenkig exzentrisch auf jedem Planeten-Zahnrad (6) angeordnet sind, einen Pfad (8) bestimmend, der einen Abschnitt (9) hat, welcher schräg und divergierend im Verhältnis zu der Zuführlinie (2) ist, wobei der Abschnitt (9) stromabwärts von dem Bereich zum Klemmen des Produkts (A) durch die Greifmittel (3) angeordnet ist.

2. Die Einwickelvorrichtung gemäß Anspruch 1, **dadurch gekennzeichnet, dass** die Greifmittel (3), zum Zwecke ihrer Ausrichtung und zur Ausrichtung des von ihnen gehaltenen Produkts (A), mit mindestens einer entsprechenden Sonde (10, 11) verbunden sind, die auf mindestens einem profilierten Nocken (12, 13) gleiten kann, der im Wesentlichen integral mit dem Sonnenrad (7) ist, wobei die Translationsbewegungen der mindestens einen Sonde (10, 11) Drehungen der Greifmittel (3) verursachen, mit daraus folgender Modifikation der Ausrichtung des zwischen ihnen gehaltenen Produkts (A).

3. Die Einwickelvorrichtung gemäß Anspruch 2, **dadurch gekennzeichnet, dass** die Greifmittel (3) eine Tragwelle (14) für ihr erstes Ende (15a, 15b) umfassen, das dazu dient, das Produkt (A) zu klemmen, wobei die Welle (14) bewegt werden kann zur gegenseitigen Annäherung und Beabstandung von Enden (15a, 15b) einander gegenüberliegender und ausgerichteter Mittel (3), mit daraus folgendem Klemmen beziehungsweise Loslassen des Produkts (A) .

4. Die Einwickelvorrichtung gemäß Anspruch 3, **dadurch gekennzeichnet, dass** der Schaft (14), im Wesentlichen an seinem zweiten Ende (16), das dem ersten Ende (15a, 15b) gegenüberliegt, mit der mindestens einen Sonde (10, 11) gekoppelt ist, die entlang dem mindestens einen Nocken (12, 13) gleiten kann.

5. Die Einwickelvorrichtung gemäß Anspruch 4, **dadurch gekennzeichnet, dass** die Sonden (10, 11) zwei an der Zahl und mit einer Leitrolle ausgestattet sind, die dazu dient, an die Seitenkante eines entsprechenden konturierten Nockens (12, 13) anzustoßen, wobei jedes Paar von Sonden (10, 11) mit einem Träger (17) gekoppelt ist, der mit einer dazugehörigen Welle (14) eines entsprechenden Greifmittels (3) verbunden ist.

6. Die Einwickelvorrichtung gemäß Anspruch 1, **dadurch gekennzeichnet, dass** die Planetenräder (6) in einer Referenzkonfiguration angeordnet sind, die vorzugsweise gewählt ist aus
- zwei Planetenrädern (6), angeordnet in einem Winkel von 180° zueinander,
- drei Planetenrädern (6), angeordnet in einem Winkel von 120° zueinander,
- vier Planetenrädern (6), angeordnet in einem Winkel von 90° zueinander,
- fünf Planetenrädern (6), angeordnet in einem Winkel von 72° zueinander,
und entsprechenden Vielfachen.

7. Die Einwickelvorrichtung gemäß Anspruch 1, **dadurch gekennzeichnet, dass** bei einer Anzahl von Planetenrädern (6), die ein Vielfaches einer Referenzkonfiguration ist, ein Teil der Greifmittel (3) für einen Betrieb mit verminderter Produktivität entfernt werden kann, entsprechend der Referenzkonfiguration.

8. Die Einwickelvorrichtung gemäß Anspruch 2-7, **dadurch gekennzeichnet, dass** der mindestens eine Nocken (12, 13) und das Sonnenrad (7) der einander zugewandten und gegenüberliegenden Karusselle (5) integral mit einer festen Achse (18) sind, wobei der Kopf (19) der Achse (18) mit einem entsprechenden Bewegungselement (20) gekoppelt ist zur kontrollierten Drehung der Achse (18) in mindestens zwei verschiedenen Anordnungen, die verschiedenen gedrehten Konfigurationen der Nocken (12, 13) entsprechen, mit daraus folgender verschiedener Variation der Ausrichtung des Produkts (A) entlang dem Pfad (8), wenn das Produkt (A) nach seinem Klemmen von den Greifmitteln (3) gehalten wird.

9. Die Einwickelvorrichtung gemäß Anspruch 2-8, **dadurch gekennzeichnet, dass** die Nocken (12, 13) komplementär zueinander sind, wobei jeder Nocken (12, 13) eine konturierte Kante hat, die in benachbarten Sektoren verschiedene Pfade für die mindestens eine Sonde (10, 11) bestimmt, welche verschiedenen Variationen der Ausrichtung des Produkts (A) entlang dem Pfad (8) nach Aufnahme jedes einzelnen Produkts (A) von der Zuführlinie (2) entsprechen.

10. Die Einwickelvorrichtung gemäß einem der Ansprüche 8, 9, **dadurch gekennzeichnet, dass** eine Abstandshülse (21) zwischen den einander zugewandten und gegenüberliegenden Karussellen (5) angeordnet ist, sich frei um die Achse (18) drehen kann und zur gegenseitigen Verbindung starr mit dem äußeren Rahmen der Karusselle (5) gekoppelt ist.

11. Die Einwickelvorrichtung gemäß Anspruch 8-10, **dadurch gekennzeichnet, dass** die Lager (22) zwischen dem äußeren Rahmen der Karusselle (5) und der Achse (18) und zwischen der Hülse (21) und der Achse (18) angeordnet sind, um die Drehung, verursacht durch ein entsprechendes Motorelement, der Karusselle (5) und der Hülse (21), die starr gekoppelt sind, zu erleichtern.

## Revendications

1. Appareil d'emballage, du type comportant une ligne (2) pour fournir des produits (A) mis en file d'attente et des moyens de préhension (3) pour prendre un produit (A) à la fois à partir de ladite ligne (2) et pour le transférer vers une station (4) respective pour le superposer à un rabat de recouvrement et pour fermer ledit rabat au-dessus du produit (A), **caractérisé en ce qu'**il comporte une paire de carrousels mutuellement opposés (5), qui sont coaxiaux et tournent de manière synchrone, chaque carrousel (5) supportant au moins deux moyens de préhension (3), qui sont répartis angulairement le long dudit carrousel (5) et sont alignés avec des moyens de préhension (3) correspondants de l'autre carrousel (5), lesdits moyens de préhension (3) étant articulés à un engrenage planétaire denté (6) qui est reçu dans ledit carrousel (5) et peuvent tourner autour d'une roue solaire dentée fixe (7) dudit carrousel (5), lesdits moyens de préhension (3) pivotant de manière excentrée sur chaque engrenage planétaire (6), définissant un trajet (8) qui a une portion (9) qui est inclinée et divergente par rapport à ladite ligne d'alimentation (2), ladite portion (9) étant agencée en aval de la zone pour le serrage dudit produit (A) par lesdits moyens de préhension (3).

2. Appareil d'emballage selon la revendication 1, **caractérisé en ce que** lesdits moyens de préhension (3) sont fonctionnellement associés, pour leur orientation et pour l'orientation du produit (A) qu'ils retiennent, à au moins une sonde (10, 11) respective qui peut glisser sur au moins une came profilée (12, 13) qui est pratiquement solidaire de ladite roue solaire (7), les translations de ladite au moins une sonde (10, 11) produisant des rotations desdits moyens de préhension (3) avec une modification conséquente de l'orientation du produit (A) retenu entre eux.

3. Appareil d'emballage selon la revendication 2, **caractérisé en ce que** lesdits moyens de préhension (3) comportent un axe de support (14) pour leur première extrémité (15a, 15b) qui est destiné à serrer le produit (A), ledit axe (14) pouvant être déplacé en translation pour l'approche et l'espacement mutuels des extrémités (15a, 15b) de moyens mutuellement opposés et alignés (3), avec un serrage conséquent et, respectivement, une libération du produit (A).

4. Appareil d'emballage selon la revendication 3, **caractérisé en ce que** ledit axe (14), pratiquement à sa seconde extrémité (16), qui est opposée à ladite première extrémité (15a, 15b), est couplé à au moins une dite sonde (10, 11) qui peut glisser le long de ladite au moins une came (12, 13).

5. Appareil d'emballage selon la revendication 4, **caractérisé en ce que** lesdites sondes (10, 11) sont au nombre de deux et sont pourvues d'un galet d'extrémité fou qui est destiné à venir en butée contre le bord latéral d'une came à contour façonné (12, 13) respective, chaque paire de sondes (10, 11) étant couplée à un support (17) qui est associé à un axe (14) respectif d'un moyen de préhension (3) respectif.

6. Appareil d'emballage selon la revendication 1, **caractérisé en ce que** lesdits engrenages planétaires (6) sont agencés dans une configuration de référence choisie de préférence parmi :
- deux engrenages planétaires (6), agencés à 180° l'un de l'autre,
- trois engrenages planétaires (6), agencées à 120° les uns des autres,
- quatre engrenages planétaires (6), agencés à 90° les uns des autres,
- cinq engrenages planétaires (6), agencés à 72° les uns des autres,
et des multiples respectifs.

7. Appareil d'emballage selon la revendication 1, **caractérisé en ce que** pour un nombre d'engrenages planétaires (6) qui est un multiple d'une configuration de référence, une partie des moyens de préhension (3) peut être retirée pour un fonctionnement avec une productivité réduite, en fonction de ladite configuration de référence.

8. Appareil d'emballage selon les revendications 2 à 7, **caractérisé en ce que** ladite au moins une came (12, 13) et ladite roue solaire (7) desdits carrousels en vis-à-vis et mutuellement opposés (5) sont solidaires d'un axe (18) fixe, la tête (19) dudit axe (18) étant associée à un élément de mouvement (20) respectif pour la rotation commandée dudit axe (18) en fonction d'au moins deux agencements différents, qui correspondent à différentes configurations de rotation desdites cames (12, 13) avec une variation différente conséquente de l'orientation du produit (A) le long du trajet (8) lorsque ledit produit (A) est retenu par lesdits moyens de préhension (3) après son serrage.

9. Appareil d'emballage selon les revendications 2 à 8, **caractérisé en ce que** lesdites cames (12, 13) sont mutuellement complémentaires, chaque came (12, 13) ayant un bord à contour façonné qui définit, dans des secteurs contigus, différents trajets pour ladite au moins une sonde (10, 11) qui correspondent à différentes variations de l'orientation du produit (A) le long du trajet (8) après la prise de chaque produit (A) individuel à partir de ladite ligne d'alimentation (2).

10. Appareil d'emballage selon l'une des revendications 8 à 9, **caractérisé en ce qu'**une douille d'espacement (21) est interposée entre lesdits carrousels en vis-à-vis et mutuellement opposés (5), peut tourner librement sur ledit axe (18) et est couplée rigidement au bâti extérieur desdits carrousels (5) pour un appariement mutuel.

11. Appareil d'emballage selon les revendications 8 à 10, **caractérisé en ce que** des paliers (22) sont interposés entre le bâti extérieur desdits carrousels (5) et ledit axe (18) et entre ladite douille (21) et ledit axe (18) afin de faciliter la rotation, imposée par un élément moteur respectif, desdits carrousels (5) et de ladite douille (21), qui sont rigidement couplés.
